# EUROPEAN PATENT APPLICATION

(11) **EP 4 201 636 A1**
(43) Date of publication of application: **28.06.2023**
(21) Application number: 21858362.3
(22) Date of filing: 19.08.2021
(51) Int. Cl.: B29C 49/06, B29C 49/42, B29C 49/56

(54) **BLOW MOLDING DEVICE**

(30) Priority: 20.08.2020 JP 2020139119
(71) Applicant: Nissei ASB Machine Co., Ltd., Komoro-shi, Nagano 384-8585 (JP)
(72) Inventor: HORIGOME Hiroshi, Komoro-shi, Nagano 384-8585 (JP); TAKEHANA Daizaburo, Komoro-shi, Nagano 384-8585 (JP)
(74) Representative: Mewburn Ellis LLP
(86) International application number: PCT/JP2021/030353
(87) International publication number: WO 2022/039218

(57) **Abstract**

A blow molding apparatus for manufacturing a resin container by blow molding a preform having a bottomed cylindrical shape includes: a pair of mold clamping plates that openably and closably supports a pair of blow split molds accommodating the preform; linear motion mechanisms that drive the pair of mold clamping plates in an opening and closing direction and apply a mold clamping force to the mold clamping plate at a time of mold closing; and a lock member that interferes with a lower end side of the mold clamping plate at a mold closing position of the blow split mold and restricts movement of the mold clamping plate in a mold opening direction.

## Description

### Technical Field

The present invention relates to a blow molding apparatus.

### Background Art

Conventionally, a stretch blow molding method has been known as one of methods for manufacturing a resin container. In the stretch blow molding method, a preform disposed in a split mold (blow mold) corresponding to a container shape is stretched in the longitudinal direction of the container, and the preform is inflated in the lateral direction by the pressure of a gas blown into the preform and formed into the shape of the container.

In the stretch blow molding method described above, in order to improve the aesthetic appearance and dimensional accuracy of the container to be manufactured, it is required to continuously maintain the mold clamping state of the blow split mold against the pressure of the gas during blow molding.

In the blow molding apparatus, a mold clamping force is applied to the blow split mold by pressing a mold clamping plate to which the blow split mold is fixed with a hydraulic piston. Although the position of the hydraulic piston with respect to the mold clamping plate is fixed, the blow split mold fixed to the mold clamping plate and the molding space in the blow split mold vary depending on the specifications of the container to be manufactured. That is, the position and dimensions of the container with respect to the mold clamping plate (projected on the mold clamping plate) can greatly vary for each container. Therefore, when the position of the point of action of the mold clamping force by the hydraulic piston and the position of the point of action of the mold opening force by the blowing air are greatly displaced at the mold clamping plate, the mold clamping plate is deflected, and the upper and lower ends of the blow split mold are easily opened.

As measures with respect to the above, for example, it is conceivable to increase the plate thickness of the mold clamping plate to improve the rigidity, or to provide a plurality of hydraulic cylinders. However, when the above measures are taken, the cost of the blow molding apparatus is significantly increased, which is not preferable. In addition, when the position of the hydraulic cylinder with respect to the mold clamping plate is configured to be adjusted each time, the adjustment work becomes very complicated.

In addition, Patent Literature 1 proposes a mold opening prevention mechanism that opens and closes in a direction orthogonal to an opening and closing direction of a blow split mold and holds and sandwiches a side surface of the closed blow split mold from the outside.

### Citation List

### Patent Literature

Patent Literature 1: JP H6-262671 A

### Summary of Invention

### Technical Problem

However, in the mold opening prevention mechanism of Patent Literature 1, since a drive device of the mold opening prevention mechanism is disposed on the side of the blow split mold, the device configuration also becomes large. Moreover, since the mold opening prevention mechanism of Patent Literature 1 has a structure to be fixed to the blow split mold, an attaching and detaching work is required every time the blow split mold is replaced.

Thus, the present invention has been made in view of such problems, and an object is to provide a blow molding apparatus capable of suppressing mold opening of various blow split molds without requiring complicated adjustment work with a space-saving and relatively inexpensive configuration.

### Solution to Problem

A blow molding apparatus of an aspect of the present invention performs blow molding on a preform having a bottomed cylindrical shape to manufacture a resin container. A blow molding apparatus includes: a pair of mold clamping plates that openably and closably supports a pair of blow split molds accommodating a preform; linear motion mechanisms that drive the pair of mold clamping plates in an opening and closing direction and apply a mold clamping force to the mold clamping plate at the time of mold closing; and a lock member that interferes with a lower end side of the mold clamping plate at a mold closing position of the blow split mold and restricts movement of the mold clamping plate in a mold opening direction.

### Advantageous Effects of Invention

According to an aspect of the present invention, it is possible to suppress mold opening of various blow split molds without requiring complicated adjustment work with a space-saving and relatively inexpensive configuration.

### Brief Description of Drawings

Fig. 1 is a diagram schematically illustrating a configuration of a blow molding apparatus of the present embodiment.
Fig. 2 is a front diagram illustrating a configuration example of a blow molding portion in a mold open state.
Fig. 3 is a front diagram illustrating a configuration example of the blow molding portion in a mold closed state.
Fig. 4(a) is a side diagram illustrating a lock portion in an unlocked state, and Fig. 4(b) is a side diagram illustrating the lock portion in a locked state.
Fig. 5 is an enlarged diagram of the lock portion in the locked state.
Fig. 6 is a flowchart illustrating a process of a method for manufacturing a container.
Fig. 7 is a graph illustrating an example of a simulation of a mold opening amount and a piston height in a blow cavity split mold.
Figs. 8(A) to 8(C) are diagrams schematically illustrating modifications of the blow molding apparatus.

### Description of Embodiments

Hereinafter, an embodiment of the present invention will be described with reference to the drawings.

In the embodiment, for the sake of easy description, structures and elements other than a main part of the present invention will be described in a simplified or omitted manner. In addition, in the drawings, the same elements are denoted by the same reference numerals. Note that the shapes, dimensions, and the like of the elements illustrated in the drawings are schematically illustrated, and do not indicate actual shapes, dimensions, and the like.

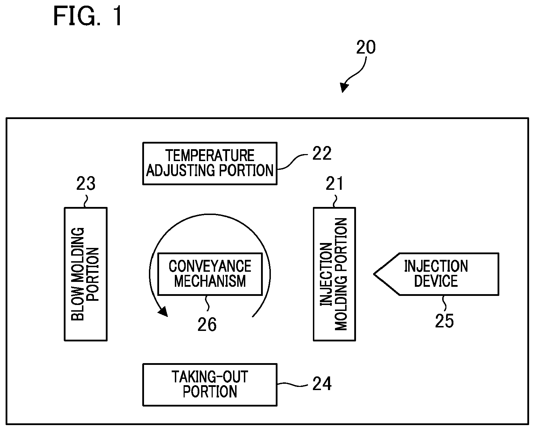

Fig. 1 is a diagram schematically illustrating a configuration of a blow molding apparatus 20 of the present embodiment. The blow molding apparatus 20 of the present embodiment is a hot parison type (also referred to as a one-stage type) device that blow-molds a container by utilizing residual heat (internal heat quantity) at the time of injection molding without cooling a preform 11 to room temperature.

The blow molding apparatus 20 illustrated in Fig. 1 includes an injection molding portion 21, a temperature adjusting portion 22, a blow molding portion 23, a taking-out portion 24, and a conveyance mechanism 26. The injection molding portion 21, the temperature adjusting portion 22, the blow molding portion 23, and the taking-out portion 24 are disposed at positions rotated a predetermined angle (for example, 90 degrees) about the conveyance mechanism 26.

### (Conveyance Mechanism 26)

The conveyance mechanism 26 includes a rotary plate (not illustrated) that rotates about an axis in a direction perpendicular to the plane of paper of Fig. 1. On the rotary plate, one or more neck molds (not illustrated in Fig. 1) for holding the neck portion of a preform or a resin container (hereinafter, simply referred to as the container) are disposed at each predetermined angle. The conveyance mechanism 26 conveys the preform (or the container) having the neck portion held by the neck mold in the order of the injection molding portion 21, the temperature adjusting portion 22, the blow molding portion 23, and the taking-out portion 24 by rotating the rotary plate. Note that the conveyance mechanism 26 can also raise and lower the rotary plate, and also performs operations related to mold closing and mold opening (releasing) for the preform at the injection molding portion 21.

### (Injection Molding Portion 21)

The injection molding portion 21 includes an injection cavity mold and an injection core mold, which are not illustrated, and manufactures a preform. An injection device 25 that supplies a resin material, which is a raw material of the preform 11, is connected to the injection molding portion 21.

In the injection molding portion 21, the injection cavity mold, the injection core mold, and the neck mold of the conveyance mechanism 26 described above are closed to form a mold space having a preform shape. Then, by pouring the resin material from the injection device 25 into such a mold space having a preform shape, a preform is manufactured by the injection molding portion 21.

Here, the overall shape of the preform is a bottomed cylindrical shape in which one end side is opened and the other end side is closed. The neck portion is formed at an end portion of the preform on the opening side.

In addition, the material of the container and the preform is a thermoplastic synthetic resin and can be appropriately selected according to the usage of the container. Specific examples of the material type include polyethylene terephthalate (PET), polyethylene naphthalate (PEN), polycyclohexanedimethylene terephthalate (PCTA), Tritan ((registered trademark): copolyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate: acrylic (PMMA), polylactic acid (PLA), and the like.

Note that even when the molds of injection molding portion 21 are opened, the neck mold of the conveyance mechanism 26 is not opened, and the preform is held and conveyed as it is. The number of preforms simultaneously molded by the injection molding portion 21 (that is, the number of containers that can be simultaneously molded by the blow molding apparatus 20) can be appropriately set.

### (Temperature Adjusting Portion 22)

The temperature adjusting portion 22 includes a mold unit for temperature adjustment including a cavity mold (temperature control pot or heating pot) capable of accommodating a preform.

The temperature adjusting portion 22 performs temperature equalization and uneven temperature removal on the preform manufactured by the injection molding portion 21 to adjust the temperature of the preform so as to have a temperature suitable for blow molding (for example, about 90°C to 105°C) and a temperature distribution suitable for a container shape to be formed. In addition, the temperature adjusting portion 22 also has a function of cooling the preform in a high temperature state after injection molding.

### (Blow Molding Portion 23)

The blow molding portion 23 performs stretch blow molding on the preform the temperature of which has been adjusted by the temperature adjusting portion 22 to manufacture a container.

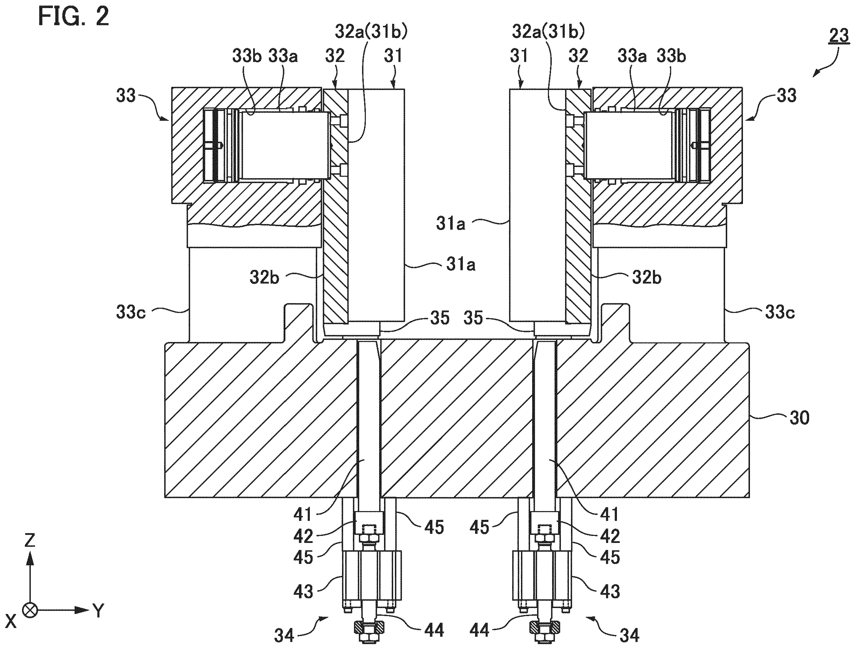

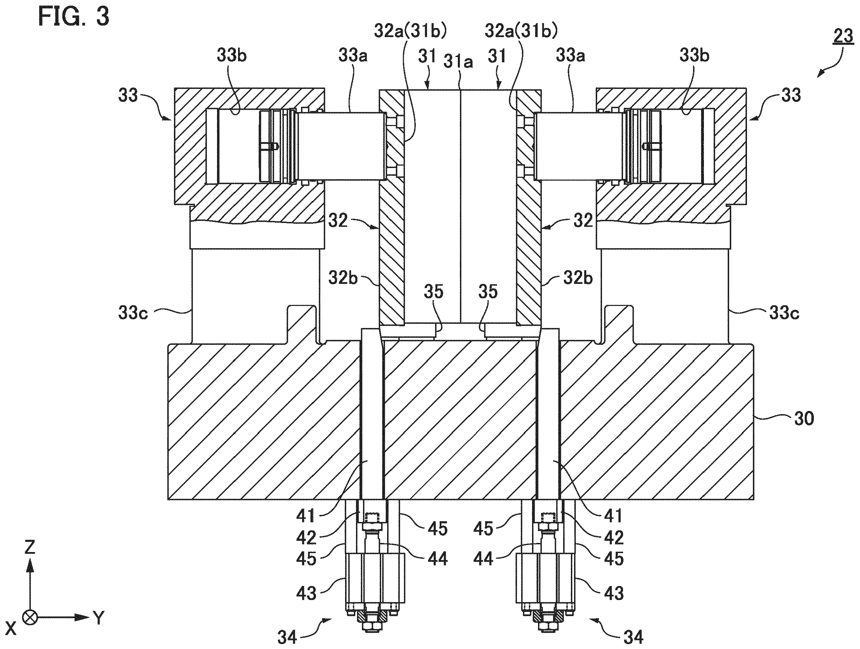

Fig. 2 is a front diagram illustrating a configuration example of the blow molding portion 23 in the mold open state, and Fig. 3 is a front diagram illustrating a configuration example of the blow molding portion 23 in the mold closed state.

The blow molding portion 23 includes a pair of blow cavity split molds 31, a pair of mold clamping plates 32, a pair of linear motion mechanisms 33, and a pair of lock portions 34. The blow cavity split molds 31, the mold clamping plates 32, and the linear motion mechanisms 33 are installed on a machine base 30, and the lock portions 34 are installed on a lower side of the machine base 30.

Note that, although not illustrated, the blow molding portion 23 further includes a longitudinal stretching member having a stretching rod, an air introduction member having a blow core, and a bottom mold. The air introduction member is disposed above the mold closing position of the blow cavity split molds 31 and is inserted into the preform (or the air introduction member abuts on the upper surface of the preform). The bottom mold is a mold that defines the shape of the bottom surface of the container, and is disposed so as to be movable up and down below the mold closing position of the blow cavity split molds 31.

The pair of blow cavity split molds 31 is a mold member including a molding space (cavity) that defines the shape of the container. The blow cavity split molds 31 are split at parting surfaces 31a along a vertical direction (Z direction) in Figs. 2 and 3, and are configured to be openable and closable in a left-right direction (Y direction) in Figs. 2 and 3. The blow cavity split molds 31 form a blow cavity for blow molding a preform (not illustrated) into a predetermined shape in the mold closed state of Fig. 3.

The pair of mold clamping plates 32 is disposed such that first surfaces 32a face each other across the blow cavity split molds 31. Back surfaces 31b of the blow cavity split molds 31 (surfaces opposite to the parting surfaces 31a) are fixed to the first surfaces 32a of the mold clamping plates 32. Note that the blow cavity split molds 31 fixed to the mold clamping plates 32 can be replaced according to a container to be manufactured.

On lower sides (preferably, at lower ends) of the mold clamping plates 32, moving portions 35 that hold the back surface sides of the blow cavity split molds 31 from the lower side and slide or roll on the upper surface of the machine base 30 along the Y direction are attached. Note that the moving portion 35 includes an oil-impregnated steel material, a linear guide, a roller, or the like.

In addition, linear motion portions 33a (for example, pistons) to be described below of the linear motion mechanisms 33 are connected to second surfaces 32b of the mold clamping plates 32 on the side opposite to the first surfaces 32a. As a result, the driving forces from the linear motion mechanisms 33 are transmitted to the blow cavity split molds 31 via the mold clamping plates 32.

The linear motion mechanism 33 is an actuator that includes the linear motion portion 33a and a drive portion 33b and moves the linear motion portion 33a forward and backward using the power of the drive portion 33b. The linear motion mechanism 33 may be configured as, for example, a hydraulic actuator or a pneumatic actuator having a piston and a cylinder, or an electric actuator having a link mechanism (or a ball screw mechanism) and an electric motor. Note that the illustrated linear motion mechanism 33a is a hydraulic actuator having a piston as the linear motion portion 33a and a cylinder as the drive portion 33.

A main body 33c of the linear motion mechanism 33 is fixed on the machine base 30, and fixes the linear motion portion 33a and the drive portion 33b at a predetermined height in the Z direction. The linear motion mechanism 33 linearly moves the linear motion portion 33a in the Y direction under the control of the drive portion 33b to drive the mold clamping plate 32 in the Y direction. In the mold closed state of Fig. 3, the linear motion mechanisms 33 perform mold clamping by pressurizing the blow cavity split molds 31 in the mold closing direction. The mold clamping force by the linear motion mechanisms 33 is set to such a magnitude that mold opening can be prevented with respect to the blow pressure.

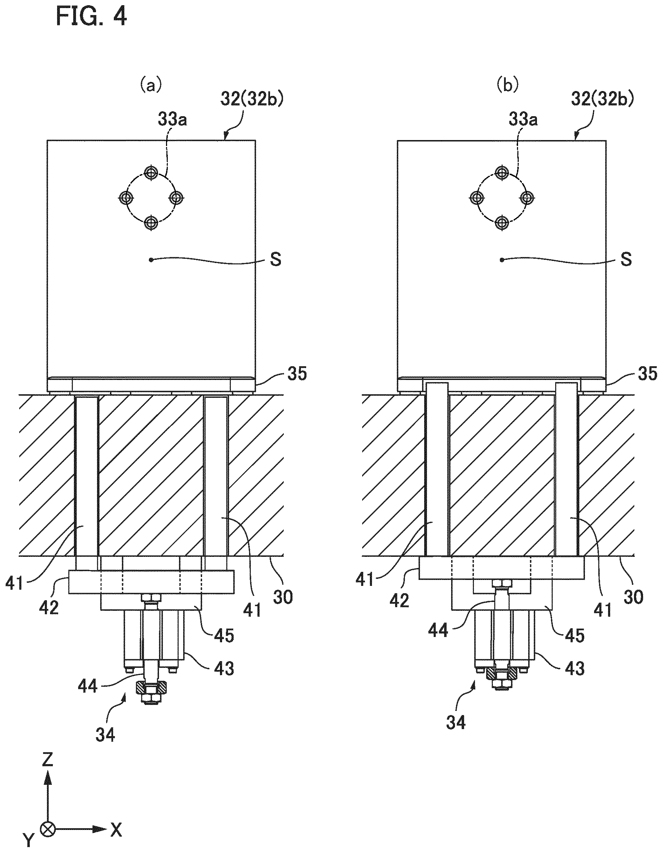

Here, as illustrated in Fig. 4, the attachment position in the height direction (Z direction) of the linear motion portion 33a to the mold clamping plate 32 is set above a center position S of the second surface 32b (XZ plane) of the mold clamping plate 32 (see Fig. 4). Usually, a plurality of models (lineups) of the blow molding apparatus 20 is provided in which the mechanical specifications are optimized for each molding usage (dimension and type of container to be molded) while considering versatility. Then, conventionally, the mold clamping plates 32 and the linear motion portions 33a have been designed so as to have different positional relationships (so as to be selectively used) for each model. For example, in a model in which many small containers are molded, the attachment position of the linear motion portion 33a to the mold clamping plate 32 is provided on the upper side, and in a model in which many large containers are molded, the attachment position of the linear motion portion 33a to the mold clamping plate 32 is provided near the center. However, in the present invention, by providing the lock portion 34 to be described below, regardless of the molding usage, for example, even in a model corresponding to molding of large containers, the attachment position of the linear motion portion 33a to the mold clamping plate 32 can be set above the center position S.

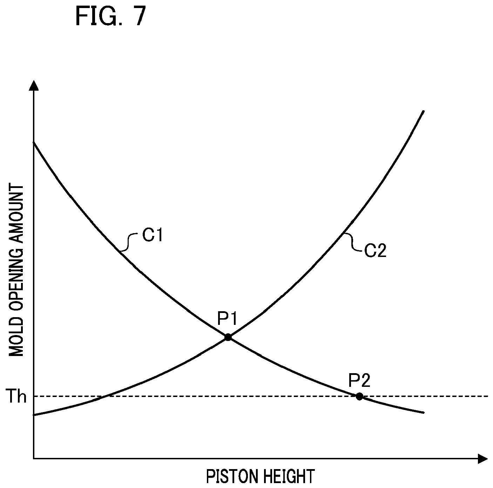

Preferably, the attachment position of the linear motion portion 33a in the height direction is set above a position (P1 in Fig. 7 to be described below) where a lower mold opening amount and an upper mold opening amount of the blow cavity split molds 31 are balanced. In addition, preferably, the attachment position of the linear motion portion 33a in the height direction may be set to a position where the upper mold opening amount of the blow cavity split molds 31 is equal to or less than a threshold value (Th in Fig. 7 to be described below). The threshold value of the mold opening amount is determined by the specifications of the container, and is not particularly limited, but is set to, for example, 0.15 mm or less, preferably 0.1 mm or less.

As described above, by disposing the linear motion portion 33a to be close to the upper side of the mold clamping plate 32, the mold clamping force from the linear motion portion 33a strongly acts on the upper side of the blow cavity split mold 31. As a result, in the present embodiment, the mold opening on the upper side of the blow cavity split mold 31 can be effectively suppressed.

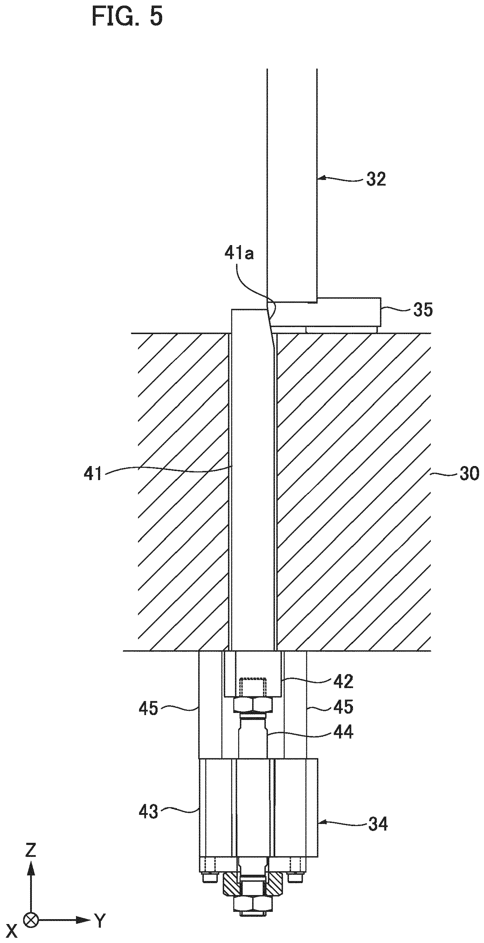

Next, the pair of lock portions 34 will be described. Fig. 4(a) is a side diagram illustrating the lock portion 34 in an unlocked state, and Fig. 4(b) is a side diagram illustrating the lock portion 34 in a locked state. In addition, Fig. 5 is an enlarged diagram of the lock portion 34 in the locked state.

The pair of lock portions 34 is disposed at positions corresponding to the mold clamping plates 32 in the mold closed state in the Y direction. The pair of lock portions 34 has a function of holding the pair of mold clamping plates 32 in the mold closed state from the outside. Note that since the pair of lock portions 34 has the same configuration, the configuration of one will be described below, and the redundant description of the other will be omitted.

The lock portion 34 includes lock bars 41, a support body 42, a drive member 43 such as an air cylinder, a hydraulic cylinder, or an electric motor, and a fixing member (coupling member, spacer member) 45.

The lock bar 41 is a stopper member extending in the Z direction, and is inserted into the machine base 30 so as to be movable forward and backward in the Z direction. In one lock portion 34, at least one or more, preferably two or more, lock bars 41 are disposed at intervals in the X direction, and a lower end side of each lock bar 41 is fixed to the support body 42. Note that the lock bar 41 is an example of the lock member.

In the unlocked state illustrated in Fig. 4(a), the lock bar 41 retracts downward from the upper surface of the machine base 30. In the unlocked state, the lock bar 41 does not interfere with the moving portion 35 (or a lower end of the mold clamping plate 32), and the mold clamping plate 32 is movable in the Y direction. On the other hand, in the locked state illustrated in Figs. 4(b) and 5, the lock bars 41 protrude upward beyond the upper surface of the machine base 30. As a result, the lock bars 41 in the locked state abut on the moving portion 35 (or the lower end of the mold clamping plate 32), and as a result, the movement of the mold clamping plate 32 in the mold opening direction is restricted by the lock bars 41.

In addition, as illustrated in Fig. 5, an inclined surface 41a having a wedge shape inclined so as to decrease in width toward the upper side is formed at an upper end portion of the lock bar 41. The inclined surface 41a of the lock bar 41 is formed at an inward position facing the moving portion 35 (or the lower end of the mold clamping plate 32) in the locked state. Therefore, when the lock bars 41 are moved upward, a reaction force to the upper side and in the mold closing direction is generated in the moving portion 35 (or the lower end of the mold clamping plate 32) as the moving portion 35 is pressed by the inclined surface 41a of the lock bars 41. As a result, the lower end sides of the mold clamping plate 32 and the blow cavity split mold 31 are more strongly fixed via the moving portions 35 (or the lower end of the mold clamping plate 32).

The angle of the inclined surface 41a of the lock bar 41 and the angle (taper angle) of the inclined surface of the lower end of the moving portion or the mold clamping plate 32 that abuts on the inclined surface 41a in the locked state may be set to, for example, 5° to 10° in order to increase the reaction force in the mold opening and closing direction (force acting in the horizontal direction) more than the reaction force toward the upper side. In addition, an inclined surface may be provided at the lower end of the lock bar 41 and the moving portion 35 or the mold clamping plate 32 in order to buffer the displacement of the stop position of the blow cavity split mold 31 or the occurrence of thermal expansion of the blow cavity split mold 31, so that the flexibility in the blow molding portion 23 is increased.

As illustrated in Figs. 4(a) and 4(b), the support body 42 is a member (that is, a member coupled to the lower ends of the lock bars 41) extending in the X direction and receiving the lower ends of the at least one or more, for example, two lock bars 41. In addition, an end of a drive rod 44 of the drive member 43 is connected between the two lock bars 41 at the support body 42.

The drive member 43 is attached to the lower side of the machine base 30 via the fixing member 45. The drive member 43 moves forward and backward the drive rod 44 disposed to face upward and extending in the Z direction. As a result, the lock bars 41 can be moved forward and backward in the Z direction via the support body 42 connected to the drive rod 44.

The fixing member 45 is a member for fixing (coupling) the drive member 43 below the machine base 30. The fixing member 45 includes, for example, a plurality of rod-shaped members fixed to the lower surface of the machine base 30 and hanging down, and a plate-shaped member fixed to lower ends (terminal ends) of the plurality of rod-shaped members. The drive member 43 is fixed to the lower surface side of the plate-shaped member. In addition, the fixing member 45 is also disposed to provide a space for the stroke of the drive rod 44 between the drive member 43 and the lower surface of the machine base 30. For example, the dimensions of the fixing member 45 in the Z direction are determined on the basis of on the sum of the stroke of the drive rod 44 and the dimensions of the support body 42 in the Z direction.

### (Taking-Out Portion 24)

Returning to Fig. 1, the taking-out portion 24 is configured to release the neck portion of the container manufactured by the blow molding portion 23 from the neck mold and take out the container to the outside of the blow molding apparatus 20.

### (Description of Blow Molding Method)

Next, a blow molding method by the blow molding apparatus 20 of the present embodiment will be described.

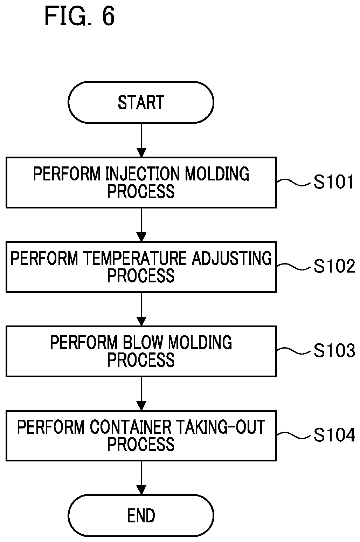

Fig. 6 is an example of a flowchart illustrating a process of the blow molding method.

### (Step S101: Injection Molding Process)

First, in the injection molding portion 21, a resin is injected from the injection device 25 into the mold space having a preform shape formed by the injection cavity mold, the injection core mold, and the neck mold of the conveyance mechanism 26 to manufacture a preform.

Thereafter, the rotary plate of the conveyance mechanism 26 rotates a predetermined angle, and the preform held in the neck mold is conveyed to the temperature adjusting portion 22 in a state of containing residual heat at the time of injection molding.

### (Step S102: Temperature Adjusting Process)

Subsequently, in the temperature adjusting portion 22, the preform is accommodated in a mold unit for temperature adjustment, and temperature adjustment for bringing the temperature of the preform close to a temperature suitable for final blowing is performed. Specifically, the temperature adjusting portion 22 cools the preform having high temperature and adjusts the temperature distribution (temperature equalization, uneven temperature removal, or the like). Thereafter, the rotary plate of the conveyance mechanism 26 rotates a predetermined angle, and the preform after temperature adjustment held in the neck mold is conveyed to the blow molding portion 23.

### (Step S103: Blow Molding Process)

Subsequently, the blow molding of the container is performed in the blow molding portion 23.

First, by driving the linear motion portions 33a of the linear motion mechanisms 33 to move the mold clamping plates 32, the blow cavity split molds 31 are closed, and the conveyed preform is accommodated in the mold space. After the blow cavity split molds 31 are closed, the pressure of the linear motion portions 33a is increased to a predetermined pressure and the blow cavity split molds 31 are clamped, and the drive members 43 of the lock portions 34 are operated to raise the lock bars 41. As a result, the lock portions 34 are in the locked state, and the movement of the mold clamping plates 32 and the blow cavity split molds 31 in the mold opening direction is restricted by the lock bars 41.

Thereafter, the air introduction member (blow core) is lowered so that the air introduction member abuts on the neck portion of the preform. Then, the stretching rod (longitudinal stretching member) is lowered to hold the bottom portion of the preform from the inner surface, longitudinal stretching is performed as necessary, and the blowing air is supplied from the air introduction member to perform lateral stretching of the preform. As a result, the preform is inflated and formed so as to be in close contact with the mold space of the blow cavity split molds 31, and is blow-molded into the container. Note that the bottom mold is caused to stand by at a lower position at which the bottom mold does not contact the bottom of the preform before mold closing of the blow cavity split molds 31, and is quickly raised to the molding position before closing the molds or after closing the molds.

During the blow molding described above, the linear motion mechanisms 33 perform mold clamping by pressurizing the blow cavity split molds 31 in the mold closing direction via the mold clamping plates 32. Since the linear motion portions 33a of the linear motion mechanisms 33 are disposed close to the upper side of the mold clamping plates 32, the mold clamping forces from the linear motion portions 33a strongly act on the upper side of the blow cavity split molds 31. Therefore, the mold closed state is maintained on the upper side of the blow cavity split molds 31 by the mold clamping forces from the linear motion portions 33a, and the mold opening due to the pressure of the blowing air is suppressed.

In addition, during the blow molding described above, the lower end sides of the mold clamping plates 32 interfere with the lock bars 41 of the lock portions 34, and the movement in the mold opening direction is restricted. Therefore, even if the forces in the mold opening direction due to the pressure of the blowing air acts on the lower side of the blow cavity split molds 31, the mold closed state is maintained by the reaction force from the lock portions 34. As a result, also on the lower side of the blow cavity split molds 31, the mold opening due to the pressure of the blowing air is suppressed.

### (Step S104: Container Taking-Out Process)

When the blow molding is ended, the drive members 43 of the lock portions 34 are operated to lower the lock bars 41, so that the lock portions 34 are brought into an unlocked state, and the mold clamping plates 32 and the blow cavity split molds 31 are movable. Thereafter, by driving the linear motion portions 33a of the linear motion mechanisms 33 to move the mold clamping plates 32, the blow cavity split molds 31 are opened. As a result, the container becomes movable from the blow molding portion 23.

Subsequently, the rotary plate of the conveyance mechanism 26 rotates a predetermined angle, and the container is conveyed to the taking-out portion 24. In the taking-out portion 24, the neck portion of the container is released from the neck mold, and the container is taken out to the outside of the blow molding apparatus 20.

Thus, one molding cycle in the method for manufacturing a container ends. Thereafter, by rotating the rotary plate of the conveyance mechanism 26 a predetermined angle, the processes of S101 to S104 described above are repeated. Note that, during the operation of the blow molding apparatus 20, the manufacture of four sets of containers having a time difference of one process is executed in parallel.

In addition, due to the structure of the blow molding apparatus 20, the time of each of the injection molding process, the temperature adjusting process, the blow molding process, and the container taking-out process has the same length. Similarly, the conveyance time between the processes is also the same.

Hereinafter, effects of the blow molding apparatus 20 of the present embodiment will be described.

The blow molding portion 23 of the present embodiment includes the lock portions 34 that interfere with the lower end sides of the mold clamping plates 32 at the mold closing position of the blow cavity split molds 31 and restrict the movement of the mold clamping plates 32 in the mold opening direction. As a result, the mold clamping plates 32 at the time of mold clamping are supported at upper and lower two points in the height direction by the linear motion portions 33a of the linear motion mechanisms 33 and the lock portions 34, so that it is possible to suppress both the upper mold opening and the lower mold opening at the time of the blow molding.

In addition, in the present embodiment, it is not necessary to increase the plate thickness of the mold clamping plates 32 or add the linear motion mechanism (hydraulic cylinder or the like) in order to suppress the upper mold opening and the lower mold opening at the time of the blow molding. Accordingly, the manufacturing cost of the blow molding apparatus 20 can be suppressed.

In addition, the lock portion 34 of the present embodiment can be used as it is even if blow cavity split molds 31 are replaced with different blow cavity split molds 31 as long as the mold closing position is the same. Accordingly, according to the present embodiment, it is possible to suppress mold opening of various blow cavity split molds 31 without requiring complicated adjustment work.

In addition, since the lock portion 34 of the present embodiment is disposed below the mold clamping plate 32, it can be attached to the machine base 30 on which the mold clamping plate 32 and the linear motion mechanism 33 are placed, and it is also easy to secure the space for the lock bars 41 of the lock portion 34 to move forward and backward. For example, when a lock mechanism is disposed on the side of the mold clamping plate 32, the area of the device increases by the space of the lock mechanism, and when the lock mechanism is disposed above the mold clamping plate 32, it is necessary to avoid interference with the preform conveyance mechanism or the like. Therefore, as in the present embodiment, by disposing the lock portion 34 below the mold clamping plate 32, space saving of the device can be realized.

In the present embodiment, since the lower mold opening of the blow cavity split molds 31 is suppressed by the lock portion 34, it is not necessary to suppress the lower mold opening with the linear motion portions 33a of the linear motion mechanism 33. That is, when setting the position of the linear motion portions 33a of the linear motion mechanism 33, it is sufficient to consider the upper mold opening amount without considering the lower mold opening amount.

Fig. 7 is a graph illustrating an example of a simulation of a mold opening amount in the blow cavity split molds 31 and a piston height (height of the linear motion portion 33a).

The vertical axis in Fig. 7 represents the mold opening amount of the blow cavity split molds 31, and the horizontal axis in Fig. 7 represents the height of the linear motion portion 33a on the mold clamping plate 32. In the horizontal axis of Fig. 7, a state where the linear motion portion 33a is attached to a reference position (for example, center position) is zero, and the value increases as the linear motion portion 33a moves to the upper side of the mold clamping plate 32 from the reference position. In addition, a curved line C1 indicates an upper mold opening of the blow cavity split molds 31 when a container (for example, a small container) in which the molding space of the blow cavity split mold 31 is concentrated at an upper position of the mold clamping plate 32 is blow-molded. A curved line C2 indicates a lower mold opening of the blow cavity split molds 31 when a container (for example, a medium to large container) in which the molding space of the blow cavity split mold 31 extends to a lower position of the mold clamping plate 32 is blow-molded.

As indicated by the curved line C1, when the molding space is present at an upper position of the mold clamping plate 32, the upper mold opening of the blow cavity split molds 31 decreases as the position of the linear motion portion 33a moves to an upper side of the mold clamping plate 32. On the other hand, as indicated by the curved line C2, when the molding space extends to a lower position of the mold clamping plate 32, the lower mold opening of the blow cavity split molds 31 increases as the position of the linear motion portion 33a moves to an upper side of the mold clamping plate 32. When the upper mold opening and the lower mold opening are simultaneously minimized by the mold clamping force from the linear motion portion 33a, the position of the linear motion portion 33a is set to P1 in which the curves C1 and C2 intersect and the lower mold opening amount and the upper mold opening amount are balanced. However, when the position of the linear motion portion 33a is set to P1, both the upper mold opening amount and the lower mold opening amount have values higher than the threshold value Th.

With the configuration of the present embodiment, since the lower mold opening of the blow cavity split molds 31 is suppressed by the lock portion 34, it is sufficient if the linear motion portion 33a of the linear motion mechanism 33 suppresses only the upper mold opening of the blow cavity split molds 31. Accordingly, with the configuration of the present embodiment, the position of the linear motion portion 33a of the linear motion mechanism 33 can be brought upward to P2, which is the intersection of the curved line C1 and the threshold value Th. As described above, due to the provision of the lock portion 34, the upper mold opening of the blow cavity split molds 31 can be further reduced.

The present invention is not limited to the above-described embodiment, and various improvements and design changes may be made without departing from the gist of the present invention.

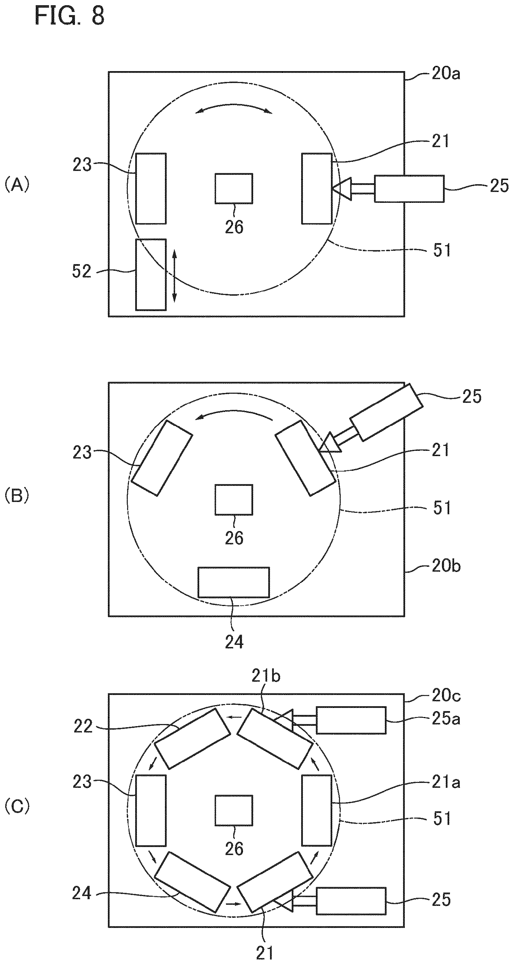

In the above-described embodiment, the hot parison type four-station type device configuration has been described as an example of the blow molding apparatus. However, the blow molding apparatus of the present invention is not limited to the above-described embodiment, and may be applied to a blow molding apparatus of other than the four-station type as illustrated, for example, in Figs. 8(A) to 8(C). Note that, in blow molding apparatuses 20a to 20c illustrated in Fig. 8, the same configurations as those of the above-described embodiment are denoted by the same reference numerals, and redundant description will be omitted.

Fig. 8(A) is a diagram schematically illustrating a configuration of the blow molding apparatus 20a of a two-station type. The blow molding apparatus 20a includes an injection molding portion 21, a blow molding portion 23, and a conveyance mechanism 26. The injection molding portion 21 and the blow molding portion 23 are disposed at positions rotated 180 degrees in a circumferential direction of a rotary plate 51 of the conveyance mechanism 26. In addition, an injection device 25 is connected to the injection molding portion 21. Further, the blow molding apparatus 20a includes a container taking-out mechanism 52 that can move forward and backward in a direction orthogonal to the mold clamping direction of the blow molding portion 23.

In the blow molding apparatus 20a, a preform injected by the injection molding portion 21 is conveyed to the blow molding portion 23 by the rotary plate 51. In the blow molding portion 23, the preform is blow-molded to manufacture a container. After molds of the blow molding portion 23 are opened, a container holding portion (not illustrated) of the container taking-out mechanism 52 is inserted between the blow split molds, and the manufactured container is detached from the neck mold and delivered to the container holding portion. As a result, the container can be taken out by the container taking-out mechanism 52.

Fig. 8(B) is a diagram schematically illustrating a configuration of the blow molding apparatus 20b of a three-station type. The blow molding apparatus 20b in Fig. 8(B) corresponds to the blow molding apparatus 20 in Fig. 1 from which the temperature adjusting portion 22 is removed.

The blow molding apparatus 20b includes an injection molding portion 21, a blow molding portion 23, a taking-out portion 24, and a conveyance mechanism 26. The injection molding portion 21, the blow molding portion 23, and the taking-out portion 24 are disposed at positions rotated 120 degrees in a circumferential direction of a rotary plate 51 of the conveyance mechanism 26. In addition, an injection device 25 is connected to the injection molding portion 21. In the blow molding apparatus 20b, a preform or container held by a neck mold is conveyed in the order of the injection molding portion 21, the blow molding portion 23, and the taking-out portion 24 by the rotation of the rotary plate 51, and the container is manufactured.

Fig. 8(C) is a diagram schematically illustrating a configuration of the blow molding apparatus 20c of a six-station type. The blow molding apparatus 20c manufactures a preform having a multilayer structure suitable for, for example, a delamination container or a decorative container, and blow-molds the preform to manufacture a container. The blow molding apparatus 20c, which further includes a first temperature adjusting portion 21a and a second injection molding portion 21b between an injection molding portion 21 (first injection molding portion) and a temperature adjusting portion 22 (second temperature adjusting portion), is different from the blow molding apparatus 20 in Fig. 1.

In the blow molding apparatus 20c, the first injection molding portion 21, the first temperature adjusting portion 21a, the second injection molding portion 21b, the second temperature adjusting portion 22, the blow molding portion 23, and the taking-out portion 24 are disposed at positions rotated 60 degrees in a circumferential direction of a rotary plate 51 of a conveyance mechanism 26.

The first injection molding portion 21 is connected to an injection device 25 and injection-molds an inner layer (or outer layer) of a preform. The first temperature adjusting portion 21a cools the preform molded by the first injection molding portion 21 and adjusts the temperature distribution. The second injection molding portion 21b is connected to an injection device 25a and injection-molds an outer layer (or inner layer) of a preform to manufacture a preform having a multilayer structure. The operations of the second temperature adjusting portion 22, the blow molding portion 23, and the taking-out portion 24 are similar to those of the blow molding apparatus 20 of Fig. 1.

Note that, in the blow molding apparatus 20c, the first temperature adjusting portion 21a between the first injection molding portion 21 and the second injection molding portion 21b may be omitted, and a blow molding apparatus of a five-station type (not illustrated) may be provided.

Also in the blow molding apparatuses illustrated in Figs. 8(A) to 8(C), by applying the blow molding portion 23 including the lock portions 34, it is possible to obtain the same effects as those of the above-described embodiment.

In addition, the blow molding apparatuses of the present invention are not limited to a hot parison type device, and it can also be applied to a cold parison type blow molding apparatus that performs blow molding by reheating a cooled preform.

Additionally, the embodiment disclosed herein is to be considered in all respects as illustrative and not restrictive. The scope of the present invention is indicated not by the above-described description but by the claims, and it is intended that meanings equivalent to the claims and all modifications within the scope are included.

### Reference Signs List

- 20, 20a, 20b, 20c: Blow molding apparatus
- 21: Injection molding portion
- 22: Temperature adjusting portion
- 23: Blow molding portion
- 30: Machine base
- 31: Blow cavity split mold
- 32: Mold clamping plate
- 33: Linear motion mechanism
- 33a: Linear motion portion
- 34: Lock portion
- 35: Moving portion
- 41: Lock bar
- 41a: Inclined surface
- 43: Drive member

## Claims

1. A blow molding apparatus for manufacturing a resin container by blow molding a preform having a bottomed cylindrical shape, the blow molding apparatus comprising:
a pair of mold clamping plates that openably and closably supports a pair of blow split molds accommodating the preform;
linear motion mechanisms that drive the pair of mold clamping plates in an opening and closing direction and apply a mold clamping force to the mold clamping plate at a time of mold closing; and
a lock member that interferes with a lower end side of the mold clamping plate at a mold closing position of the blow split mold and restricts movement of the mold clamping plate in a mold opening direction.

2. The blow molding apparatus according to claim 1, wherein the lock member is disposed on a lower side of the mold clamping plate and is movable forward and backward in a vertical direction.

3. The blow molding apparatus according to claim 2, wherein the lock member has an inclined surface that converts upward movement of the lock member into a force in a direction of the mold closing.

4. The blow molding apparatus according to any one of claims 1 to 3, wherein the linear motion mechanisms apply a mold clamping force to the mold clamping plate at a position above a center of the mold clamping plate in a height direction.

5. The blow molding apparatus according to claim 4, wherein the linear motion mechanisms apply a mold clamping force to the mold clamping plate at a position above a position where a lower mold opening amount and an upper mold opening amount of the blow split molds are balanced.

6. The blow molding apparatus according to claim 4 or 5, wherein the linear motion mechanisms apply a mold clamping force to the mold clamping plate at a position where an upper mold opening amount of the blow split molds is equal to or less than a threshold value.

7. The blow molding apparatus according to any one of claims 1 to 6, wherein the preform is accommodated in the blow split molds from upper side.
